# EUROPÄISCHE PATENTANMELDUNG

(11) **EP 2 527 877 A2**
(43) Veröffentlichungstag der Anmeldung: **28.11.2012**
(21) Anmeldenummer: 12002693.5
(22) Anmeldetag: 18.04.2012
(51) Int. Cl.: G01V 8/20

(54) **Lichtgitter**

(30) Priorität: 23.05.2011 DE 102011102233
(71) Anmelder: Marantec Antriebs- und Steuerungstechnik GmbH & Co. KG., 33428 Marienfeld (DE)
(72) Erfinder: Haskenhoff, Gerd, 33790 Halle (DE)
(74) Vertreter: Laufhütte, Dieter

(57) **Zusammenfassung**

Die vorliegende Erfindung betrifft ein Lichtgitter zur Überwachung eines Torlaufweges aus einer Mehrzahl von übereinander angeordneten Lichtschranken, wobei die einzelnen Lichtschranken jeweils aus einem Sender und einem Empfänger aufgebaut sind, und einer Steuerung zur Ansteuerung der Lichtschranken, wobei die einzelnen Lichtschranken nacheinander so angesteuert werden, daß jeweils nur maximal eine Lichtschranke aktiv ist.

## Beschreibung

Die vorliegende Erfindung betrifft ein Lichtgitter zur Überwachung eines Torlaufweges aus einer Mehrzahl von übereinander angeordneten Lichtschranken, wobei die einzelnen Lichtschranken jeweils aus einem Sender und einem Empfänger aufgebaut sind, und einer Steuerung zur Ansteuerung der Lichtschranken.

Lichtschranken werden seit langem dazu eingesetzt, um die Sicherheit beim Betrieb von Torantrieben zu erhöhen. Der durch den Sender und Empfänger definierte Lichtweg einer Lichtschranke wird dabei so im Bereich des Torlaufweges angeordnet, daß er durch ein Hindernis, welches sich in den Torlaufweg hinein bewegt oder sich in diesem befindet, unterbrochen wird. Die Lichtschranke signalisiert dann an die Torsteuerung, daß ein Hindernis erkannt wurde, worauf die Torsteuerung das Tor in einen sicheren Zustand bringt.

Zur weiteren Erhöhung der Sicherheit können dabei mehrere Lichtschranken eingesetzt werden, welche übereinander angeordnet werden und so eine im wesentlichen flächige Überwachung des Torlaufweges ermöglichen.

Aufgabe der vorliegenden Erfindung ist es, ein solches Lichtgitter aus mehreren übereinander angeordneten Lichtschranken weiter zu verbessern und dabei insbesondere die Erfassung von Hindernissen sicherer zu gestalten.

Diese Aufgabe wird erfindungsgemäß durch ein Lichtgitter gemäß Anspruch 1 gelöst. Das erfindungsgemäße Lichtgitter zur Überwachung eines Torlaufweges umfaßt dabei eine Mehrzahl von übereinander angeordneten Lichtschranken, wobei die einzelnen Lichtschranken jeweils aus einem Sender und einem Empfänger aufgebaut sind. Weiterhin umfaßt das Lichtgitter eine Steuerung zur Ansteuerung der Lichtschranken. Erfindungsgemäß steuert die Steuerung die einzelnen Lichtschranken dabei nacheinander so an, daß jeweils nur maximal eine Lichtschranke aktiv ist.

Das erfindungsgemäße Lichtgitter besteht damit im Prinzip aus einer Aneinanderreihung von Einweglichtschranken, welche beispielsweise in bestimmten Abständen übereinander angeordnet sind, so daß ein Hindernis an beliebiger Position in der so entstandenen überwachten Fläche erkannt werden kann. Durch die erfindungsgemäße Multiplexsteuerung wird dabei gewährleistet, daß ein Sender nur seinen zugehörigen Empfänger ansteuert. Dabei werden die einzelnen Einweglichtschranken nacheinander so angesteuert, daß immer nur ein Sender-Empfänger-Paar aktiv ist. So kann das empfangene Signal jederzeit eindeutig zugeordnet werden. Durch die erfindungsgemäße Ansteuerung der Lichtschranken wird verhindert, daß sich benachbarte Lichtwege gegenseitig beeinflussen. Alternativ zu Einweglichtschranken können auch Reflexlichtschranken eingesetzt werden.

Die einzelnen Einweglichtschranken werden damit erfindungsgemäß nacheinander angesteuert und abgefragt. Am Ende eines solchen Durchlaufs müssen dabei alle Empfänger ein gültiges Signal empfangen haben. Haben dagegen nicht alle Empfänger ein gültiges Signal gemeldet, so befindet sich ein Hindernis im Lichtweg, was der Torsteuerung gemeldet werden kann.

Vorteilhafterweise erfolgt die Ansteuerung der Lichtschranken über ein analoges Steuersignal. Hierdurch kann auf eine komplexe Elektronik zur digitalen Kommunikation zwischen der Steuerung und den einzelnen Lichtschranken verzichtet werden. Insbesondere wird dabei erfindungsgemäß eine Rampenfunktion als Steuersignal eingesetzt, wobei beim Durchlaufen der Rampenfunktion die einzelnen Lichtschranken nacheinander aktiviert und wieder abgeschaltet werden.

Vorteilhafterweise wird dabei ein einziges Signal zur Ansteuerung aller Lichtschranken eingesetzt. Insbesondere wird so der Aufwand für die Verkabelung der Lichtschranken begrenzt. Vorteilhafterweise wird dabei das gleiche Signal sowohl zur Ansteuerung der Sender als auch der Empfänger eingesetzt. Erfindungsgemäß werden damit durch das Steuersignal die einzelnen Sender-Empfänger-Paare aktiviert und wieder deaktiviert.

Vorteilhafterweise weisen die Sender und/oder die Empfänger jeweils einen Fensterkomparator auf, welcher den Sender bzw. Empfänger einschaltet, wenn die am Fensterkomparator anliegende Spannung in einem vorbestimmten Fenster liegt. Hierdurch ist es auf einfachste Weise möglich, durch ein analoges Steuersignal, welches am Fensterkomparator eine entsprechende Spannung erzeugt, die Sender und die Empfänger ein- und auszuschalten.

Vorteilhafterweise weisen die Sender und/oder die Empfänger dabei jeweils einen Meßwiderstand auf, wobei die Meßwiderstände der Sender und die Meßwiderstände der Empfänger jeweils in Reihe geschaltet sind.

Vorteilhafterweise greifen die Fensterkomparatoren dabei jeweils eine Spannung ab, welche an den in Reihe geschalteten Meßwiderständen abfällt. Vorteilhafterweise wird dabei jeweils zwischen einem gemeinsamen Spannungseingang der Lichtschranken und einem Anschluß des dem jeweiligen Fensterkomparator zugeordneten Meßwiderstands eine Spannung abgegriffen, welche zur Ansteuerung des Fensterkomparators dient.

Die Fenster der Fensterkomparatoren sind dabei vorteilhafterweise so eingestellt, daß bei jeder Spannung, welche an den in Reihe geschalteten Meßwiderständen angelegt wird, maximal einer der Fensterkomparatoren den ihm zugeordneten Sender bzw. Empfänger aktiviert. Durchläuft nun die Spannung, welche an den in Reihe geschalteten Meßwiderständen angelegt wird, eine Rampenfunktion, werden so nacheinander die einzelnen Lichtschranken durch ihre jeweiligen Fensterkomparatoren ein- und wieder ausgeschaltet, ohne daß es zu Überlappungen kommt.

Erfindungsgemäß können dabei die einzelnen Lichtschranken identisch ausgeführt sein. Insbesondere können die einzelnen Lichtschranken dabei die gleichen Meßwiderstände aufweisen. Weiterhin können die gleichen Fensterkomparatoren und insbesondere Fensterkomparatoren mit dem gleichen Spannungsfenster eingesetzt werden.

Die Reihenschaltung der Meßwiderstände der einzelnen Fensterkomparatoren erlaubt es dennoch, die einzelnen Lichtschranken nacheinander durch ein einziges Steuersignal anzusteuern.

Vorteilhafterweise sind dabei die Meßwiderstände der Sender in Reihe geschaltet, und die Meßwiderstände der Empfänger in Reihe geschaltet. Die in Reihe geschalteten Meßwiderstände der Sender und die in Reihe geschalteten Meßwiderstände der Empfänger können nun wiederum parallel geschaltet werden, so daß Sender und zugehörige Empfänger synchronisiert werden.

Die vorliegende Erfindung erlaubt es dabei insbesondere, mit der gleichen Steuerung eine unterschiedliche Anzahl von Lichtschranken im Lichtgitter einzusetzen. Vorteilhafterweise sind die Steuerung sowie die Fensterkomparatoren der einzelnen Lichtschranken dabei so ausgelegt, daß mehr als fünf, weiterhin vorteilhafterweise mehr als zehn, weiterhin vorteilhafterweise mehr als fünfzehn Lichtschranken gleichzeitig im Lichtgitter betrieben werden können. Dies kann dadurch erreicht werden, daß das Fenster, in welchem die einzelnen Lichtschranken schalten, entsprechend klein gehalten wird. Dabei können dadurch, daß die Steuerung jeweils eine Rampenfunktion als Signal abgibt, alle Lichtschranken nacheinander ein- und wieder ausgeschaltet werden, ohne daß die Rampenfunktion oder die Steuerung an die Anzahl der anzusteuernden Lichtschranken angepasst werden müsste.

Die erfindungsgemäße Steuerung des Lichtgitters umfaßt weiterhin vorteilhafterweise eine Auswerteschaltung zur Auswertung der Signale von den einzelnen Lichtschranken. Insbesondere wertet die Auswerteschaltung dabei die Signale aus, welche von den Empfängern abgegeben werden. Die Auswerteschaltung erkennt so, ob sich im überwachten Bereich ein Hindernis befindet oder nicht.

Insbesondere überprüft die Auswerteschaltung dabei, ob alle Empfänger ein gültiges Signal empfangen bzw. an die Auswerteschaltung gemeldet haben. Haben nicht alle Empfänger ein gültiges Signal gemeldet, so schließt die Auswerteschaltung, daß sich ein Hindernis im Lichtweg befindet. Vorteilhafterweise meldet das Lichtgitter dabei an die Torsteuerung, daß sich ein Hindernis im überwachten Bereich befindet, woraufhin die Torsteuerung das Tor in einen sicheren Zustand bringt. Das erfindungsgemäße Lichtgitter arbeitet damit von der Torsteuerung aus gesehen im wesentlichen wie eine einfache Lichtschranke, da es lediglich global meldet, daß sich ein Hindernis im Torweg befindet. Informationen zum Zustand der einzelnen Lichtschranken müssen so nicht übertragen werden. Das erfindungsgemäße Lichtgitter kann so mit vorhandenen Torsteuerungen eingesetzt werden und so z.B. eine vorhandene Lichtschranke ersetzten.

Vorteilhafterweise geben die Empfänger der Lichtschranken ihre Signale an eine gemeinsame Ausgangssignalleitung ab, wobei die Auswerteschaltung das Signal auf dieser gemeinsamen Ausgangssignalleitung auswertet. Hierdurch wird der Aufwand zur Verkabelung der einzelnen Lichtschranken nochmals verringert. Der Einsatz einer solchen gemeinsamen Ausgangssignalleitung ist dabei erfindungsgemäß insbesondere dann möglich, wenn nicht nur die Sender nacheinander ein- und ausgeschaltet werden, sondern synchron auch die Empfänger, so daß die von den einzelnen Empfängern abgegebenen Signale sich untereinander nicht stören. Vorteilhafterweise erzeugen dabei auch die Empfänger der Lichtschranken ein Signal, welches sie auf die Ausgangssignalleitung abgeben.

Vorteilhafterweise weist die Auswerteschaltung dabei erfindungsgemäß eine Lernfunktion auf, welche das von den einzelnen Lichtschranken bei unversperrtem Weg nacheinander abgegebene Signal als Referenz abspeichert. Insbesondere wird dabei im Rahmen der Lernfunktion das Steuersignal, welches die Steuerung zur Ansteuerung der Lichtschranken einsetzt, durchlaufen und schaltet dabei die einzelnen Lichtschranken nacheinander ein und wieder aus. Das bei diesem Durchlauf von den Empfängern der Lichtschranken an die Auswerteeinheit abgegebene Signal wird nun als Referenz für den darauffolgenden Betrieb herangezogen.

Insbesondere kann dabei im Rahmen der Lernfunktion eine Auswertung des während des Lernbetriebs aufgenommenen Signals erfolgen.

Vorteilhafterweise werden dabei die Zeiten erkannt und abgespeichert, zu denen das von den einzelnen Empfängern erzeugte Signal beginnt und/oder endet. Die Auswerteschaltung weiß damit nach dem Durchlaufen der Lernfunktion, zu welchen Zeitpunkten die Empfänger der einzelnen Lichtschranken bei ordnungsgemäßer Funktion ein Signal an die Auswerteschaltung abgeben müssen.

Im darauffolgenden Betrieb wird dann beim Durchlaufen des Steuersignals für die Aktivierung der einzelnen Lichtschranken überprüft, ob zu den entsprechenden Zeitpunkten tatsächlich Signale von den Empfängern der Lichtschranken erhalten werden. Werden dabei von einzelnen Empfängern keine gültigen Signale zum erwarteten Zeitpunkt erzeugt, bedeutet dies, daß sich ein Hindernis im Lichtweg befindet.

Anstelle einer zeitlichen Referenzierung zum Steuersignal zur Ansteuerung der einzelnen Lichtschranken kann dabei selbstverständlich auch eine Referenzierung zu den Spannungspegeln des Steuersignals erfolgen, zu welchen beim Durchlaufen der Lernfunktion Signale von den einzelnen Empfängern empfangen wurden.

Die erfindungsgemäße Lernfunktion hat dabei den Vorteil, daß die Steuerung und die Auswerteeinheit nicht speziell auf eine bestimmte Anzahl von Lichtschranken ausgelegt werden müssen. Vielmehr erkennt die Auswerteeinheit erst im Rahmen der Lernfunktion, wie viele Lichtschranken angeschlossen sind und wann diese Signale abgeben. Die gleiche Steuerung und Auswerteeinheit kann so mit einer unterschiedlichen Anzahl an Lichtschranken eingesetzt werden.

Neben dem erfindungsgemäßen Lichtgitter umfaßt die vorliegende Erfindung weiterhin einzelne Lichtschranken mit einem Fensterkomparator und einem Meßwiderstand, aus welchen sich ein erfindungsgemäßes Lichtgitter aufbauen lässt. Insbesondere umfaßt die vorliegende Erfindung dabei Sender mit einem Fensterkomparator und einem Meßwiderstand für ein Lichtgitter, wie es oben beschrieben wurde, sowie Empfänger mit einem Fensterkomparator und einem Meßwiderstand, wie es oben beschrieben wurde. Weiterhin umfaßt die vorliegende Erfindung eine Steuerung für ein Lichtgitter, wie es oben beschrieben wurde, sowie eine Auswerteeinheit für ein Lichtgitter, wie es oben beschrieben wurde.

Neben dem Lichtgitter umfaßt die vorliegende Erfindung weiterhin eine Torsteuerung zur Ansteuerung eines Torantriebs mit einem Lichtgitter, wie es oben beschrieben wurde. Das Lichtgitter dient dabei zur Überwachung des Torlaufweges und signalisiert an die Torsteuerung, wenn sich ein Hindernis im Torlaufweg befindet. Wird der Torsteuerung ein Hindernis signalisiert, bringt diese das Tor in einen sicheren Zustand. Die Torsteuerung steuert dabei insbesondere einen Antrieb eines Tores an, insbesondere einen elektrischen Antrieb.

Die vorliegende Erfindung wird nun anhand von Ausführungsbeispielen sowie Zeichnungen näher dargestellt. Dabei zeigen:
- Figur 1:: eine Prinzipdarstellung eines durch Lichtschranken bzw. ein Lichtgitter gemäß der vorliegenden Erfindung überwachten Torlaufweges,
- Figur 2:: eine Schaltungsanordnung für ein Ausführungsbeispiel erfindungsgemäßer Lichtschranken bzw. eines erfindungsgemäßen Lichtgitters,
- Figur 3:: ein Diagramm, welches einen Signalverlauf bei einem Ausführungsbeispiel einer erfindungsgemäßen Leistungsregelung und einer erfindungsgemäßen Gültigkeitsüberwachung zeigt,
- Figur 4:: ein Lichtgitter, welches aus einem erfindungsgemäßen Set aus Elementen aufgebaut ist,
- Figuren 5a - c:: drei Schritte eines erfindungsgemäßen Verfahrens zum Aufbau eines Lichtgitters aus einem erfindungsgemäßen Set,
- Figuren 6a, 6b:: zwei perspektivische Ansichten von Konnektoren eines erfindungsgemäßen Sets und
- Figur 7:: eine Schnittansicht durch einen Verbindungsbereich zweier Elemente eines erfindungsgemäßen Sets.

Im folgenden wird ein Ausführungsbeispiel der vorliegenden Erfindung gezeigt, welches mehrere Aspekte der vorliegenden Erfindung verwirklicht. Während die mehreren Aspekte der vorliegenden Erfindung damit im Ausführungsbeispiel miteinander kombiniert sind, ist es ebenso denkbar, die einzelnen Aspekte auch getrennt voneinander erfindungsgemäß einzusetzen.

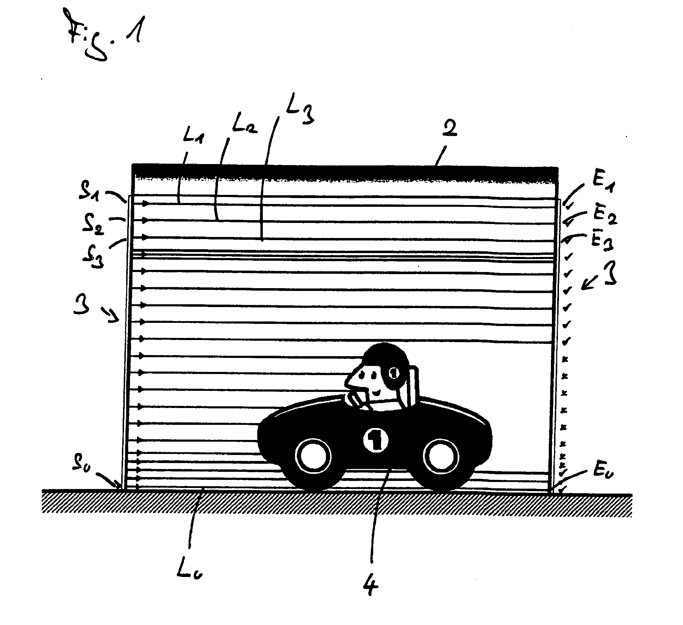

Figur 1 zeigt in einer Prinzipdarstellung ein Ausführungsbeispiel die Funktionsweise eines erfindungsgemäßen Lichtgitters, welches den Torlaufweg eines Torblatts 2 berührungslos absichert. Das Lichtgitter besteht dabei im Prinzip aus einer Aneinanderreihung von Einweglichtschranken L₁ - Lₙ. Die Lichtschranken werden dabei in bestimmten Abständen übereinander angeordnet, so daß ein Hindernis an beliebiger Position in der so entstehenden überwachten Fläche erkannt werden kann.

Jede Lichtschranke L₁ - Lₙ umfaßt dabei einen Sender S₁ - Sₙ, welcher mit einem Empfänger E₁ - Eₙ zusammenwirkt und gemeinsam mit diesem den überwachten Lichtweg definiert. Befindet sich nun ein Hindernis 4 im Lichtweg, kann der entsprechende Empfänger das vom Sender abgesendete Signal nicht empfangen, da das Hindernis 4 den Lichtweg unterbricht. Liefert daher einer der Empfänger des Lichtgitters kein gültiges Signal, kann daran erkannt werden, daß sich ein Hindernis 4 im überwachten Torlaufweg befindet. Erkennt das Lichtgitter ein solches Hindernis, wird dies der Torsteuerung signalisiert, welche dann wiederum das Tor in einen sicheren Zustand bringt.

Das Lichtgitter weist dabei eine Steuerung auf, welche die einzelnen Lichtschranken ansteuert. Weiterhin weist das Lichtgitter eine Auswerteeinheit auf, welche die Signale von den Empfängern der einzelnen Lichtschranken auswertet. In einer bevorzugten Ausführungsform signalisiert die Auswerteschaltung dabei der Torsteuerung lediglich, daß sich ein Hindernis im überwachten Bereich befindet. Von der Torsteuerung aus gesehen arbeitet das Lichtgitter damit im wesentlichen wie eine übliche Lichtschranke, welche ebenfalls nur die beiden Zustände Hindernis/kein-Hindernis unterscheidet. Hierdurch kann das erfindungsgemäße Lichtgitter mit konventionellen Torsteuerungen kombiniert werden.

Gemäß einem ersten Aspekt der vorliegenden Erfindung werden die einzelnen Lichtschranken L₁ - Lₙ des Lichtgitters in einem Multiplexverfahren nacheinander angesteuert und abgefragt. Am Ende eines Multiplexdurchlaufs müssen dabei alle Empfänger ein gültiges Signal empfangen haben. Haben nicht alle Empfänger ein gültiges Signal gemeldet, so schließt die Auswerteeinheit, daß sich ein Hindernis im Lichtweg befindet und signalisiert dies der Torsteuerung.

Erfindungsgemäß gewährleistet dabei die Ansteuerung der Lichtschranken, daß ein Sender nur seinen jeweils zugehörigen Empfänger ansteuert. Dies ist mit Hilfe der Multiplexsteuerung realisiert. Dabei werden die einzelnen Lichtschranken nacheinander angesteuert, so daß immer maximal ein Sender-Empfänger-Paar aktiv ist. So kann das empfangene Signal zu jeder Zeit eindeutig zugeordnet werden.

Vorteilhafterweise werden dabei die einzelnen Sender-Empfänger-Paare nacheinander jeweils so ein- und ausgeschaltet, daß sowohl der Sender als auch der Empfänger ein- bzw. ausgeschaltet werden.

Hierdurch kann jeder Lichtweg eindeutig ausgewertet werden. Die durch die parallele Anordnung der Lichtwege prinzipiell bestehende Möglichkeit, daß sich benachbarte Lichtwege gegenseitig beeinflussen, wird so ausgeschlossen.

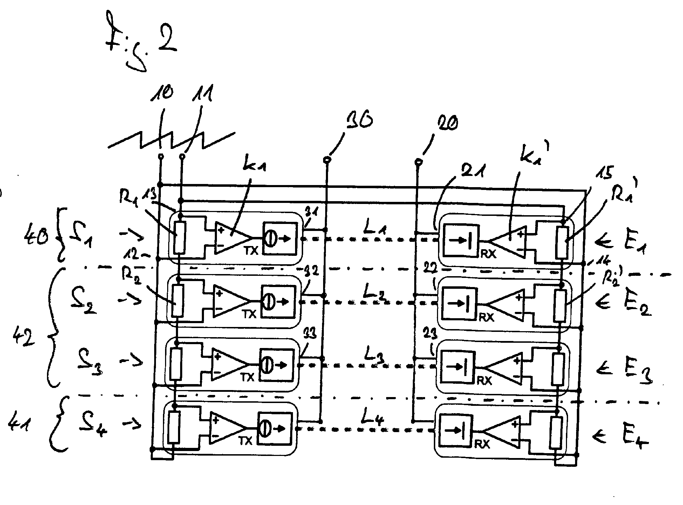

Für das erfindungsgemäße Multiplexverfahren müssen dabei die Sender mit ihren zugehörigen Empfängern synchronisiert werden. Dies kann beispielsweise durch eine Schaltungsanordnung geschehen, wie sie in Figur 2 gezeigt ist.

Jeder Sender Sₙ und jeder Empfänger Eₙ umfaßt dabei einen Fensterkomparator Kₙ bzw. K'ₙ und einen Meßwiderstand Rₙ bzw. R'ₙ. Die Fensterkomparatoren Kₙ schalten dabei die Sender Sₙ ein, wenn an dem Meßwiderstand Rₙ ein bestimmter Spannungsabfall anliegt, und die Fensterkomparatoren K'ₙ schalten die Empfänger Eₙ ein, wenn an dem zugeordneten Meßwiderstand R'ₙ ein bestimmter Spannungsabfall anliegt.

Sämtliche Meßwiderstände Rₙ und R'ₙ, sowie Komparatoren Kₙ und K'ₙ können dabei identisch sein, das heißt die Meßwiderstände können alle den gleichen Widerstand und die Komparatoren können alle das gleiche Schaltfenster aufweisen.

Die Meßwiderstände Rₙ der Sender Sₙ auf der einen Seite des Lichtgitters und die Meßwiderstände R'ₙ der Empfänger Eₙ auf der anderen Seite des Lichtgitters werden dabei jeweils in Reihe geschaltet. Die in Reihe geschalteten Meßwiderstände Rₙ bzw. R'ₙ werden nun wiederum parallel geschaltet, so daß die Senderseite und die Empfängerseite parallel geschaltet ist, während die einzelnen Sender bzw. Empfänger der Lichtschranken in Reihe geschaltet sind.

Die Komparatoren greifen dabei jeweils eine Spannung zwischen einer gemeinsamen Signalleitung 10 und einem Anschluß des ihnen zugeordneten Meßwiderstands in der Reihenschaltung ab. Hierdurch liegt an jedem Komparator in der Reihenschaltung eine unterschiedliche Spannung an. An den Komparatoren der einander zugeordneten Sender und Empfänger liegt dagegen jeweils die gleiche Spannung an.

Erfindungsgemäß durchläuft nun die Spannung an der Reihenschaltung aus Meßwiderständen eine Rampenfunktion. Dadurch werden die einzelnen Sender-Empfänger-Paare durch ihre Fensterkomparatoren nacheinander ein- und wieder ausgeschaltet. Dies erlaubt es, mit Hilfe eines analogen Signals die einzelnen Lichtschranken nacheinander ein- und auszuschalten.

Im Ausführungsbeispiel wird dabei das Steuersignal zum Ein- und Ausschalten der Lichtschranken zwischen den Signalleitungen 10 und 11 angelegt, welche mit den beiden Enden der Reihenschaltung verbunden sind. Der Komparator K₁ des Senders S₁ greift nun die Spannung zwischen der Steuerleitung 10, mit welcher er über die Verbindung 12 verbunden ist, und dem Anschluß 13 des ihm zugeordneten Meßwiderstands R₁ in der Reihenschaltung ab. Der Komparator K'₁ des Empfängers E₁ greift in analoger Weise die Spannung zwischen den Punkten 14 und 15 ab.

Da es sich bei dem Sender-Empfänger-Paar S₁ - E₁ um die erste Lichtschranke in der Reihenschaltung handelt, greifen die Komparatoren dabei die gesamte über die Reihenspannung abfallende Spannung ab. Bei den darunter liegenden Lichtschranken greifen die Komparatoren dagegen die Spannung jeweils nur über einen Teil der Reihenschaltung ab, so daß die Spannung entsprechend geringer ist.

Durch eine entsprechende Einstellung des Fensters der Komparatoren und des Steuersignals zum Schalten der Lichtschranken kann so sichergestellt werden, daß bei einem Durchlauf des Steuersignals, beispielsweise bei einem Durchlauf der Rampe, alle Lichtschranken nacheinander ein- und ausgeschaltet werden, ohne daß mehrere Lichtschranken gleichzeitig aktiv wären.

Die Empfänger E₁ bis Eₙ weisen dabei jeweils einen Ausgang 21, 22, ... auf, über welchen sie mit einer gemeinsamen Ausgangssignalleitung 20 in Verbindung stehen. Sämtliche Empfänger legen damit ihr Signal an die gleiche Ausgangssignalleitung 20 an, so daß die Auswerteeinheit nur das Signal auf dieser Ausgangssignalleitung auswerten muss. Die einzelnen Empfänger stören sich dabei nicht gegenseitig, da sie erfindungsgemäß nacheinander ein- und ausgeschaltet werden und damit nicht gleichzeitig aktiv sind.

Die erfindungsgemäße Steuerung weist dabei in einem Ausführungsbeispiel eine Lernfunktion auf. Dabei wird bei Inbetriebnahme das Steuersignal zum Ein- und Ausschalten der einzelnen Lichtschranken an die Signalleitungen 10 und 11 angelegt, während sich kein Hindernis im zu überwachenden Bereich befindet. Durch das Steuersignal werden nun die einzelnen Lichtschranken ein- und wieder ausgeschaltet. Die Auswerteeinheit erhält während dieses Lerndurchlaufs ein Signal auf der Ausgangssignalleitung 20, bei welchem sich die Ausgangssignale der einzelnen Empfänger durch das Ein- und wieder Ausschalten der einzelnen Lichtschranken aneinanderreihen. Die Auswerteeinheit nimmt dieses Signal nun als Referenz für den darauffolgenden Betrieb.

Insbesondere ermittelt die Auswerteeinheit dabei im Lernbetrieb, zu welchen Zeiten bzw. in welchen Bereichen des Steuersignals zum Ein- und Ausschalten der Lichtschranken ein Signal eines Empfängers auf der Ausgangssignalleitung 20 anliegt. Liegt nun während des Betriebs in den zuvor ermittelten Bereichen kein Ausgangssignal eines Empfängers an der Ausgangssignalleitung 20 an, so schließt die Auswerteeinheit hieraus, daß sich ein Hindernis im überwachten Bereich befindet.

Der erfindungsgemäße Aufbau des Lichtgitters aus mehreren in Reihe geschalteten Lichtschranken erlaubt dabei eine einfache Kaskadierung des Lichtgitters. Insbesondere kann dabei die Steuerung und die Auswerteeinheit mit unterschiedlich vielen Lichtschranken betrieben werden, ohne daß sie hierfür speziell programmiert werden müßte. Die erfindungsgemäße Ein- und Ausschaltung über die Komparatoren erlaubt es vielmehr, mit einer im wesentlichen frei wählbaren Anzahl von Lichtschranken zu arbeiten.

Die Lernfunktion erlaubt es weiterhin, mit der gleichen Auswerteeinheit ebenfalls unterschiedlich viele Lichtschranken zu betreiben. Die Auswerteeinheit muss dabei nicht im Voraus wissen, wie viele Lichtschranken eingesetzt werden, sondern ermittelt das Referenzsignal während des Lernbetriebs.

Insbesondere kann das Lichtgitter dabei so ausgelegt sein, daß mit einer bis zu 5 Lichtschranken, vorteilhafterweise bis zu 10 Lichtschranken, weiter vorteilhafterweise bis zu 15 Lichtschranken gearbeitet werden kann.

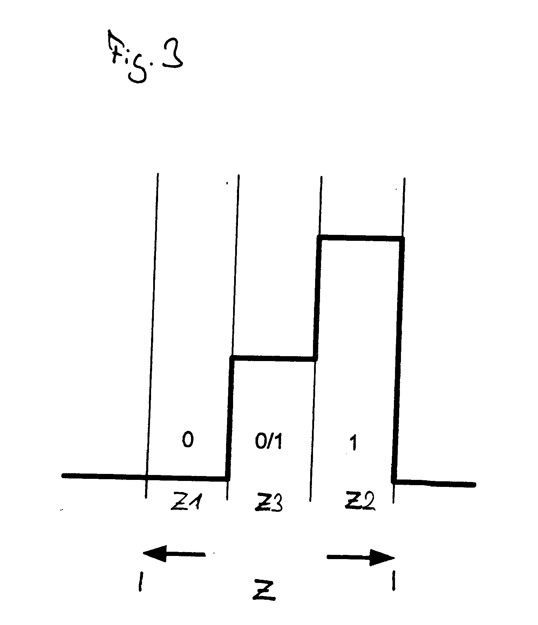

In Figur 3 ist nun ein zweiter Aspekt der vorliegenden Erfindung dargestellt, welcher sowohl bei einem Lichtgitter als auch bei einer einzelnen Lichtschranke eingesetzt werden kann. Erfindungsgemäß ist dabei ein mehrstufiger Signalaufbau des von einem Sender S abgegebenen Signals vorgesehen, um die Signale überwachen und/oder die Sendeleistung regeln zu können.

Die Signalbreite Z eines vom Sender abgegebenen Signals wird dabei in drei Zeitbereiche Z1, Z2 und Z3 unterteilt.

Im ersten Zeitbereich Z1 wird dabei kein Signal gesendet, im zweiten Zeitbereich Z2 ein Signal mit einer gewissen Signalstärke bzw. Signalamplitude. Die Auswerteeinheit ist dabei so aufgebaut, daß sie anhand einer Empfängersignalschwelle entscheidet, ob ein Signal empfangen wird oder nicht. Dies entspricht im wesentlichen einer digitalen Auswertung, bei welcher dem Signal eine Null oder eine Eins zugeordnet wird.

Ein Signal wird dabei von der Auswerteeinheit nur dann als gültig gewertet, wenn im Zeitbereich Z1 eine Null und im Zeitbereich Z2 eine Eins empfangen wird, d.h. wenn im Zeitbereich Z1 die Signalstärke unterhalb der Empfängersignalschwelle liegt und im Zeitbereich Z2 oberhalb. Damit können Störungen durch Fremdlicht verhindert werden. Insbesondere ist es sehr unwahrscheinlich, das Fremdlicht genau die erwartete Signalform aufweist, so daß Fremdlicht den Betrieb der Lichtschranke nicht beeinträchtigt.

Mit Hilfe des dritten Zeitbereichs Z3 kann die Sendeleistung geregelt werden. Die Signalamplitude im dritten Zeitbereich beträgt immer einen festen Bruchteil der Amplitude im zweiten Zeitbereich. Z. B. kann die Amplitude im zweiten Zeitbereich das doppelte der Amplitude im dritten Zeitbereich betragen. Wird nun im dritten Zeitbereich eine Null empfangen, dann wird die Sendeleistung geringfügig erhöht. Wird dagegen eine Eins empfangen, wird die Sendeleistung geringfügig gesenkt. So wird die Sendeleistung im zweiten Zeitbereich, welche für die Gültigkeit des Signals entscheidend ist, immer so eingeregelt, daß sie einen festen Faktor höher ist als die für eine ordnungsgemäße Signalübertragung gerade notwendige Leistung.

Die beiden Aspekte der Signalüberwachung und der Leistungsregelung durch die unterschiedlichen Signalamplituden in den drei Zeitbereichen können dabei offensichtlich auch unabhängig voneinander eingesetzt werden. Weiterhin ist die zeitliche Abfolge der drei Zeitbereiche aufeinander nicht festgelegt. Im Ausführungsbeispiel folgt dabei auf den ersten Zeitbereich der dritte Zeitbereich und auf diesen der zweite Zeitbereich.

Die Signalüberwachung und Leistungsregelung, wie sie in Figur 3 gezeigt ist, kann dabei sowohl bei Einzellichtschranken eingesetzt werden, als auch bei einem Lichtgitter.

Bei dem in Figur 2 gezeigten Aufbau eines Lichtgitters gemäß dem ersten Aspekt der vorliegenden Erfindung kann die Signalüberwachung und/oder Leistungsregelung gemäß dem zweiten Aspekt dabei dadurch implementiert werden, daß die Sender sämtlicher Lichtschranken über entsprechende Eingänge 31, 32, ... mit einer Steuersignalleitung 30 in Verbindung stehen, über welche die Sendeleistung bzw. die Signalform eingestellt wird.

Die Signalleitungen 10 und 11 wirken damit als Schaltsignalleitungen, über welche das Schaltsteuersignal angelegt wird, welches die einzelnen Lichtschranken nacheinander ein- und ausschaltet. Die Steuersignalleitung 30 dient dagegen zur Steuerung der Sendeleistung bzw. der Signalform für die einzelnen Sender der Lichtschranken, zu den Zeitpunkten, zu welchen diese aktiv sind.

Die oben beschriebene erfindungsgemäße Lernfunktion kann dabei auch dazu eingesetzt werden, die Steuersignale auf der Steuerleitung 30 mit den Schaltsteuersignalen an den Steuerleitungen 10 und 11 zu synchronisieren. Dabei wird im Lernmodus zunächst an der Steuersignalleitung 30 ein Signal angelegt, welches durchgehend eine maximale Sendeleistung der jeweils aktiven Sender erzeugt. Wird nun das Schaltsteuersignal durchlaufen, senden die Sender nacheinander jeweils mit maximaler Leistung für den gesamten Zeitraum, in welchem sie aktiv sind. Über das durch die Empfänger empfangene Signal kann nun die Signalbreite Z eines jeden Sender-Empfänger-Paares ermittelt und mit dem Schaltsteuersignal korreliert werden. Die Steuerung unterteilt diese Signalbreite Z dann entsprechend in drei Zeitabschnitte Z1 - Z3, in welchen im darauffolgenden Betrieb über das Signal auf der Steuersignalleitung 30 der erfindungsgemäße mehrstufige Signalaufbau für jeden Sender erzeugt wird.

Die Leistungsregelung über den dritten Zeitabschnitt kann dabei erfindungsgemäß entweder für jeden Sender separat, oder durch eine Mitteilung der in den jeweiligen dritten Zeitabschnitten Z3 empfangenen Signale erfolgen.

Wie bereits oben beschrieben erlaubt der erfindungsgemäße Aufbau des Lichtgitters einen Betrieb mit einer unterschiedlichen Anzahl von Lichtschranken. Erfindungsgemäß sind die Zeitfenster der Komparatoren und das Schaltsteuersignal dabei so ausgelegt, daß mehr als fünf, vorteilhafterweise mehr als zehn, weiterhin vorteilhafterweise mehr als fünfzehn, vorzugsweise um die zwanzig Lichtschranken in Reihe geschaltet werden können.

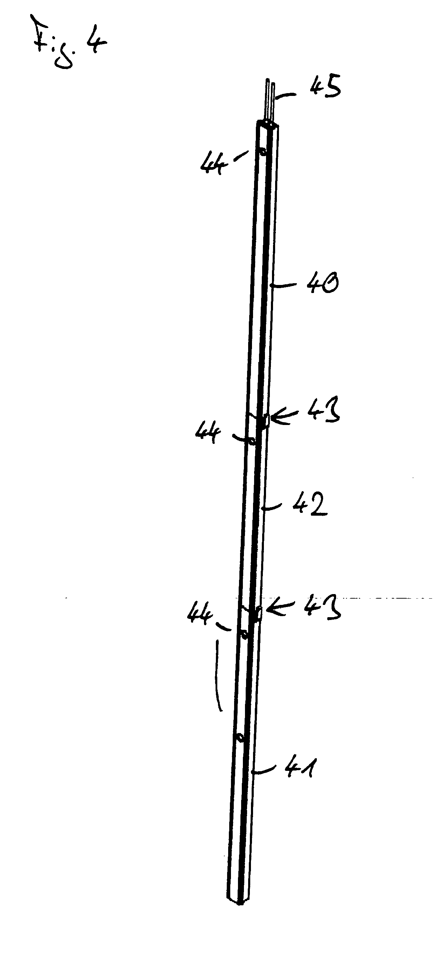

Als dritten Aspekt der vorliegenden Erfindung zeigen Figuren 4 bis 7 ein Ausführungsbeispiel eines Sets zum Aufbau eines Lichtgitters und das entsprechende Verfahren zum Aufbau des Lichtgitters, durch welches ein Lichtgitter aus vorgefertigten Elementen eines Baukastensystems jeweils in der gewünschten Länge zusammengefügt werden kann. Die Sender und Empfänger des erfindungsgemäßen Lichtgitters sind dabei jeweils in einem langgestreckten Gehäuse untergebracht, welches durch das Baukastensystem erfindungsgemäß kaskadierbar aufgebaut ist.

Das Gehäuse besteht dabei aus mehreren Elementen, die je nach Bedarf in der entsprechenden Länge zusammengesteckt werden können. Das Set weist hierzu ein oberes Endelement 40 und ein unteres Endelement 41 für beide Seiten des Lichtgitters auf. Dazwischen können je nach Bedarf weitere Zwischenelemente 42 gesteckt werden. Die Elemente sind dabei jeweils in Verbindungsbereichen 43 miteinander verbunden. Weiterhin weisen die einzelnen Elemente Mittel 44 zur Befestigung einer Wand auf, im Ausführungsbeispiel Aussparungen, durch welche Schrauben oder Befestigungsstifte hindurch geführt werden können.

In zumindest einem Endelement ist dabei vorteilhafterweise auch eine Steuerung und/oder eine Auswerteeinheit vorgesehen, welche sämtliche Lichtschranken des Gitters ansteuert bzw. die Signale von diesen auswertet. Die beiden Endelemente der linken und rechten Seite des Lichtgitters sind dabei über Signalleitungen 45 miteinander verbunden, um eine entsprechende Synchronisation und eine Signalübertragung zu ermöglichen. Weiterhin weist mindestens eines der Endelemente eine Signalleitung zur Verbindung mit einer Torsteuerung auf.

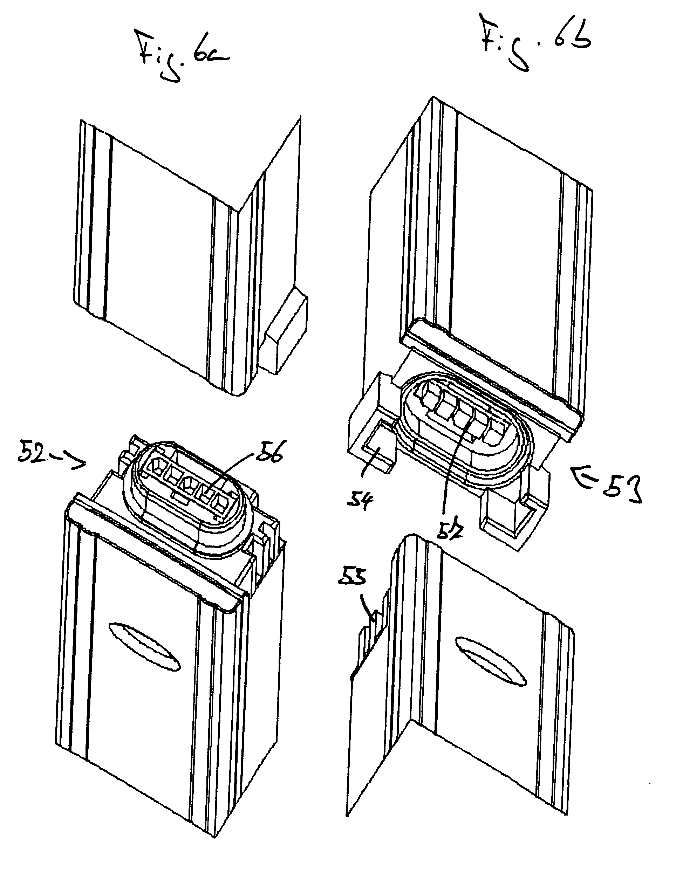

Wie insbesondere aus Figuren 6 hervorgeht, dienen die Konnektoren der einzelnen Elemente dabei sowohl der elektrischen, als auch der mechanischen Verbindung der Elemente miteinander. Die elektrische Verbindung erfolgt dabei über einen Stecker 56, welcher in eine Buchse 57 eingeschoben werden kann. Die mechanische Verbindung erfolgt über Federelemente 54, welche in Nuten 55 eingeschoben werden können. Die Endelemente 41 und 40 weisen dabei jeweils nur an ihrem oberen bzw. unteren Ende Konnektoren auf, die Zwischenelemente 42 dagegen an beiden Enden.

Jedes der Elemente kann dabei eine oder mehrere Sender bzw. Empfänger des Lichtgitters umfassen, welche vorteilhafterweise in das Gehäuse eingebaut und mit den Konnektoren verdrahtet sind.

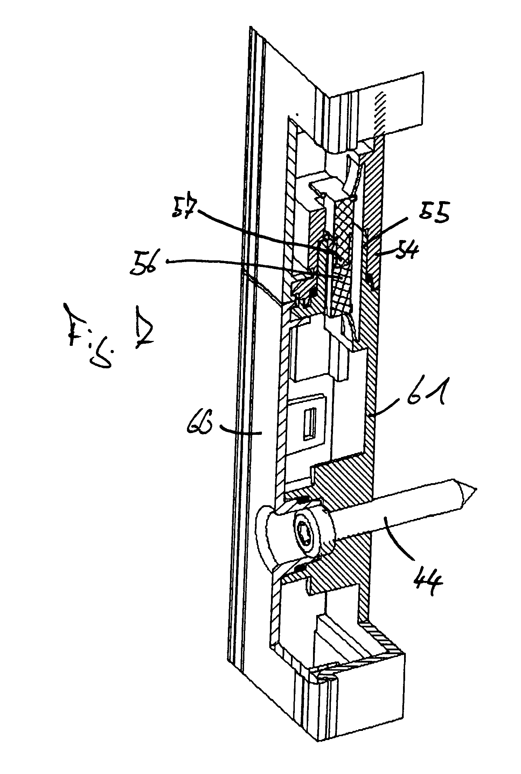

Das Gehäuse kann dabei, wie insbesondere aus Figur 7 hervorgeht, ein Deckelelement 60 sowie ein Bodenelement 61 umfassen, welche miteinander verbunden sind und das Gehäuse bilden. Die Konnektoren sind dabei jeweils in mindestens einem Endbereich des Gehäuses angeordnet.

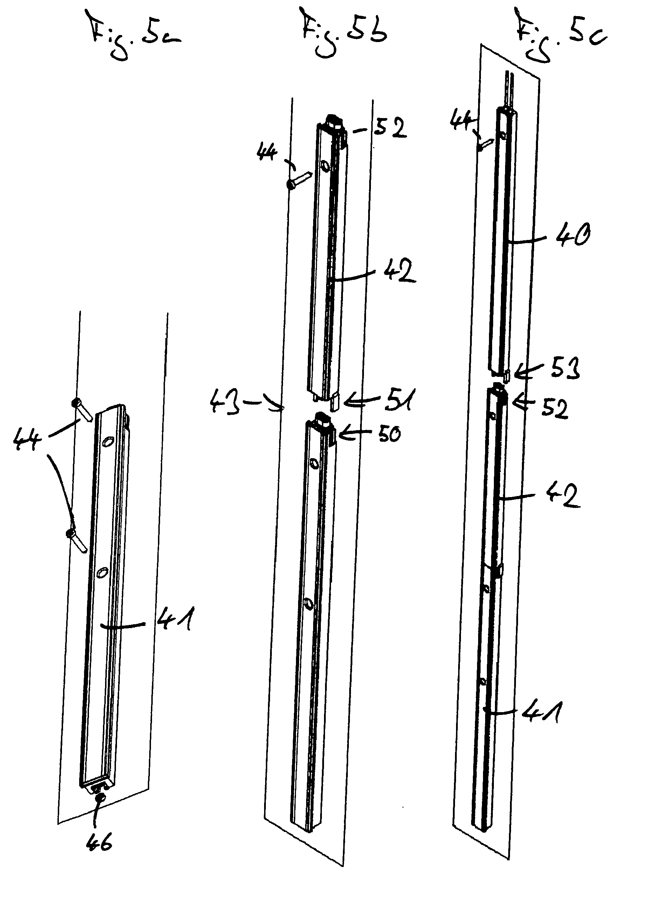

Ein Verfahren zur Montage des erfindungsgemäßen Lichtgitters ist dabei in Figuren 5 dargestellt. Dabei wird zunächst ein unteres Endelement 41 über Schrauben 44 an einer Wand befestigt. Alternativ oder zusätzlich kann das Endelement auch rückseitig auf ein Befestigungselement 46 aufgeschoben werden. Nach der Befestigung des Endelements wird nun je nach gewünschter Höhe eine entsprechende Anzahl von Zwischenstücken 42 aufgesteckt und ebenfalls an der Wand befestigt. Zuletzt wird das obere Endelement 40 aufgesteckt und befestigt.

Auf einer Seite des Tores wird dabei eine Empfängerseite aufgebaut, auf der anderen Seite eine Senderseite. Diese müssen dabei so aufeinander ausgerichtet sein, daß die jeweiligen Sender auf die ihnen zugeordneten Empfänger ausgerichtet sind. Senderseite und Empfängerseite werden über ihre entsprechenden Endstücke, insbesondere die oberen Endstücke 40, miteinander und mit der Torsteuerung verbunden.

Ein solches Baukastensystem gemäß dem dritten Aspekt der vorliegenden Erfindung kann besonders einfach mit dem als ersten Aspekt beschriebenen Aufbau eines Lichtgitters verwirklicht werden, wie er in Fig. 2 im Ausführungsbeispiel dargestellt ist.

Eine beispielhafte Aufteilung der einzelnen Lichtschranken auf die Elemente des Lichtgitters ist dabei in Figur 2 durch gestrichelte Linien dargestellt. So kann beispielsweise der Sender S₁ dem oberen Endelement 40, die Sender S₂ und S₃ dem Zwischenstück 42 und der Sender S₄ dem unteren Endstück 41 zugeordnet sein. Entsprechend sind die Empfänger E₁ bis E₄ auf oberes Endstück, Zwischenstück und unteres Endstück der Empfängerseite aufgeteilt.

Wie sofort aus Figur 2 ersichtlich, müssen dabei jeweils nur wenige elektrische Verbindungen zwischen den einzelnen Elementen über die Konnektoren hergestellt werden. Zum einen stellen die Konnektoren dabei die gemeinsame Steuerleitung 10 durch Verbindung der einzelnen Abschnitte miteinander zur Verfügung, sowie die Reihenschaltung der Meßwiderstände, und zwar auf Sender- und auf Empfängerseite. Auf der Empfängerseite wird weiterhin die gemeinsame Ausgangssignalleitung 20 durch die Konnektoren hergestellt, auf der Senderseite gegebenenfalls die gemeinsame Steuersignalleitung 30.

Die Steuerung kann dabei beispielsweise in das obere Endstück 40 auf Senderseite oder auf Empfängerseite eingebaut werden.

Wie bereits erläutert, erlaubt der Aufbau des Lichtgitters sowie die Ansteuerung dabei das Einfügen von weiteren Zwischenstücken 42 und damit das Einfügen von weiteren Lichtschranken, ohne das hierfür die Steuerung bzw. die Auswerteeinheit angepaßt werden müßten.

Die vorliegende Erfindung erlaubt somit einen besonders einfachen und dennoch sicheren Aufbau eines Lichtgitters bzw. eine entsprechende Ansteuerung des Lichtgitters oder einer Lichtschranke, wobei die einzelnen Aspekte sowohl wie im Ausführungsbeispiel kombiniert, oder auch jeweils für sich genommen eingesetzt werden können.

## Patentansprüche

1. Lichtgitter zur Überwachung eines Torlaufweges aus einer Mehrzahl von übereinander angeordneten Lichtschranken, wobei die einzelnen Lichtschranken jeweils aus einem Sender und einem Empfänger aufgebaut sind, und einer Steuerung zur Ansteuerung der Lichtschranken,
**dadurch gekennzeichnet,**
**daß** die einzelnen Lichtschranken nacheinander so angesteuert werden, daß jeweils nur maximal eine Lichtschranke aktiv ist.

2. Lichtgitter nach Anspruch 1, wobei die Ansteuerung der Lichtschranken über ein analoges Steuersignal erfolgt, insbesondere über eine Rampenfunktion, wobei vorteilhafterweise ein einziges Signal zur Ansteuerung aller Lichtschranken eingesetzt wird, und weiterhin vorteilhafterweise das Signal sowohl zur Ansteuerung der Sender als auch der Empfänger eingesetzt wird.

3. Lichtgitter nach Anspruch 1 oder 2, wobei die Sender und/oder die Empfänger jeweils einen Fensterkomparator aufweisen, welcher den Sender bzw. Empfänger einschaltet, wenn die am Fensterkomparator anliegende Spannung in einem vorbestimmten Fenster liegt.

4. Lichtgitter nach Anspruch 3, wobei die Sender und/oder die Empfänger jeweils einen Meßwiderstand aufweisen, wobei die Meßwiderstände der Sender und die Meßwiderstände der Empfänger jeweils in Reihe geschaltet sind.

5. Lichtgitter nach einem der vorangegangenen Ansprüche, wobei die einzelnen Lichtschranken identisch ausgeführt sind und insbesondere die gleichen Meßwiderstände und/oder Fensterkomparatoren aufweisen.

6. Lichtgitter nach einem der vorangegangenen Ansprüche, wobei die Steuerung eine Auswerteschaltung zur Auswertung der Signale von den einzelnen Lichtschranken aufweist, wobei die Empfänger der Lichtschranken vorteilhafterweise ein Signal an eine gemeinsame Ausgangssignalleitung abgeben und die Auswerteschaltung das Signal auf dieser gemeinsamen Ausgangssignalleitung auswertet.

7. Lichtgitter nach Anspruch 6, wobei die Auswerteschaltung eine Lernfunktion aufweist, welche bei teilweise versperrten Weg das von den einzelnen Lichtschranken im Bereich der freien Lichtwege abgegebene Signal als Referenz abspeichert, wobei vorteilhafterweise die Zeiten und/oder Spannungspegel des Steuersignals zur Ansteuerung der Lichtschranken abgespeichert werden, zu denen das von den einzelnen Empfängern erzeugte Signal beginnt und/oder endet.

8. Lichtgitter nach Anspruch 7, wobei bei Änderung der Lichtwege, so beispielsweise bei Hinzutreten von Lichtwegen, diese Änderungen während des Betriebs dynamisch hinzugelernt werden können.

9. Sender und/oder Empfänger mit einem Fensterkomparator und einem Meßwiderstand für ein Lichtgitter nach einem der vorangegangenen Ansprüche.

10. Torsteuerung zur Ansteuerung eines Torantriebs mit einem Lichtgitter nach einem der vorangegangenen Ansprüche zur Überwachung des Torlaufweges.
